# EUROPEAN PATENT APPLICATION

(11) **EP 4 194 320 A1**
(43) Date of publication of application: **14.06.2023**
(21) Application number: 21213104.9
(22) Date of filing: 08.12.2021
(51) Int. Cl.: B62D 15/02, B60R 9/00, G01S 15/86, G08G 1/14, B60W 30/06

(54) **ELECTRONIC CONTROL UNIT FOR PARK OUT OF A VEHICLE**

(71) Applicant: Volvo Car Corporation, 40531 Göteborg (SE)
(72) Inventor: Johansson Andermård, Conny, 442 98 Kode (SE); Oresten, Jonas, 441 56 Alingsås (SE)
(74) Representative: Nederlandsch Octrooibureau

(57) **Abstract**

An electronic control unit (100) for a vehicle (1), comprising: at least one object sensor (120) for sensing objects in an environment in a vicinity of the vehicle, a position sensor (110, 180) for sensing a speed of the vehicle and/or for sensing a position of the vehicle, a non-volatile memory (130), a processor (140) connected to the object sensor (120), the position sensor (110, 180), and the non-volatile memory (130), the processor (140) being configured to instruct the object sensor (120) to sense and collect data on the environment in the vicinity of the vehicle (1) from a collect time t_{c} when the position sensor (110, 180) measures a vehicle speed below a predetermined threshold and/or measures a vehicle position that corresponds to the position of a parking area, the processor (140) creating an environmental map of stationary objects around the vehicle on the basis of data of the at least one object sensor (120) and storing the environmental map in the non-volatile memory (130) prior to a sleep time tₛ, following on the collect time t_{c}, when the electronic control unit is placed in a sleep mode.

## Description

### Technical field

The disclosure describes an electronic control unit for a vehicle. The disclosure further describes a method for safe park out of a vehicle using the electronic control unit.

### Background Art

It is known to initiate a forward parking operation of a vehicle after a previous measurement of the parking space. The vehicle that is to be parked is driven past a parking space and measures the parking space using suitable environmental sensors. Starting from a starting position, a driver assist unit calculates a parking trajectory and moves the vehicle to a position that is best suitable for a forward parking operation.

Once in the parking space, the vehicle may collide with objects around it upon leaving of the parking space in the next driving cycle. These objects may not be accurately detected as many environmental sensors have a reduced accuracy when the ego vehicle is standing still or the speed is very low, due to limitations in triangulation reference points. This results in problems in determining position, size and distance to an object.

Furthermore, when in the parking space, the surrounding objects can often be very close to the vehicle. Many types of sensors are not designed to detect objects in close proximity to the vehicle and may overlook such objects completely. Also, the travelling distance between the ego vehicle and an object forming a potential threat may be very short so that limited time is available for collecting sufficient sensor data at vehicle start up when the vehicle is moving. Furthermore, detection of objects around the parking space may be hindered by weather and lighting conditions having changed and being less favorable when parking off compared to when the vehicle was parked in.

It is an object of the disclosure to provide an electronic control unit for a vehicle and a respective method that allows the vehicle to leave a parking spot in a more reliable and safe manner.

### Summary

According to a first aspect of the disclosure, an electronic control unit for a vehicle, comprises:
at least one object sensor for sensing objects in an environment in a vicinity of the vehicle, a position sensor for sensing a speed of the vehicle and/or for sensing a position of the vehicle, a non-volatile memory, a processor connected to the object sensor, the position sensor, and the non-volatile memory, the processor being configured to instruct the object sensor to sense and collect data on the environment in the vicinity of the vehicle from a collect time t_{c} when the position sensor measures a vehicle speed below a predetermined threshold and/or measures a vehicle position that corresponds to a position of a parking area, the processor creating an environmental map of stationary objects around the vehicle on the basis of data of the at least one object sensor and storing the environmental map in the non-volatile memory prior to a sleep time tₛ, following on the collect time t_{c}, when the electronic control unit is placed in a sleep mode.

The disclosure provides an electronic control unit and one or more sensors for mounting on and within a vehicle, that obtains more reliable parking environment data during the parking in process and that uses the data during a later driving cycle at a next startup of the vehicle, when parking off. By collecting data when there is still a relative speed between the vehicle and the objects in the parking area, more reliable data can be collected and the likelihood that an object around the vehicle is detected correctly is increased. Furthermore, the sensor data can at the relatively low speed be collected from different angles, essentially eliminating blind spots and increasing confidence. Reusable sensor data can be collected from different distances as the vehicle approaches the parking spot, which means the optimal detection ranges for different sensor types can all be satisfied. By combining the sensor data into an environmental map, storage, further display, and usage of data are facilitated. Stationary objects are the sole objects of relevance that are recalled from the non-volatile memory for a next driving cycle.

The processor may be further configured to retrieve the environmental map from the non-volatile memory after a drive off time t_{d}, following on the sleep time tₛ, when an increase in vehicle speed is initiated and the electronic control unit is re-activated out of the sleep mode.

The storage of an environmental map by the electronic control unit in the non-volatile memory allows for the previously measured map to help the driver or to provide driving assistance of the vehicle in a new driving cycle when driving off from the parking space. Based on higher quality of the data that was collected at parking in, a safer parking out is provided.

The processor may further instruct the at least one object sensor to collect further data, starting at the drive-off time t_{d}, the processor complementing the stored environmental map with the further data to an updated map.

The electronic control unit provides an improved driving assistance for parking out, by detecting new obstacles that have entered into the parking area and combining the newly measured data with the data that was collected during the first driving cycle when parking in.

The electronic control unit may further comprise a display connected to the processor, the processor providing a visual aid for a driver of the vehicle after the drive-off time t_{d} and based on the retrieved environmental map and/or on the updated map. The display provides a visual assistance to a driver when driving out from a parking space, based on the environmental map that was created at parking in.

The electronic control unit may further comprise an audio system connected to the processor to provide an audio warning after the drive-off time t_{d}, based on the retrieved environmental map and/or on the updated map. The electronic control unit warns the driver through an acoustic signal when the vehicle is in the vicinity of an obstacle, on the basis of the environmental map.

The electronic control unit may further comprise an automatic braking system or an actuator to reduce a vehicle speed and/or steer the vehicle starting after the drive-off time t_{d}, based on the retrieved environmental map and/or on the updated map. The electronic control unit may activate the vehicle's driving assistance to avoid obstacles based on the environmental map data.

The environmental map may comprise a proximity map of the vicinity of the vehicle corresponding to a circle of at most 10m radius measured from an outer edge of the vehicle, preferably 5m radius. The processing of the environmental map to a proximity map at a closer vicinity of the vehicle within o circle of reduced diameter around the vehicle, may comprise discarding part of the data to reduce storage requirements of the non-volatile memory and reducing memory. By focusing on a relevant volume around the vehicle that is scanned by the sensors, an increased point to volume (m³) ratio at a given depth is obtained.

The object sensor may comprise at least one of an ultrasonic sensor, lidar, radar and camera. The electronic control unit allows to collect spatial data of the position of objects around vehicle by a combination of a number of different types of sensors, depending on the sensors' availability.

The processor using a threat evaluation algorithm to identify when an automatic intervention is needed to avoid collision based on the retrieved environmental map and a vehicle trajectory.

The electronic control unit at park out evaluates potential threats, based on the environmental map data that was obtained at park in and allows a take over from manual driving to assisted driving.

According to a second aspect of the disclosure, a method for safe park out of a vehicle at a drive off time t_{d}, comprises: collecting data with one or more sensors placed on the outside of a vehicle, creating an environmental map of stationary objects around the vehicle based on the collected data, storing the environmental map in a non-volatile memory when the vehicle is parked.

The method for safe park out provides storage of reliable data measured at park in and saving the data in a map form for usage in a future driving cycle during park out. The method may comprise additional data collection when at park out while there is a relative speed between the vehicle and a measured object that is larger than zero so that an object around the vehicle is detected correctly. Furthermore, sensor data can also be collected from different angles, essentially eliminating blind spots and increasing confidence. Reusable sensor data can be collected from different distances as the vehicle approaches the parking spot, which means the optimal detection ranges of different sensor types can all be satisfied. Data that is combined into a map facilitates storage, further display and usage of the data. Stationary objects are sole objects of relevance to recall from the non-volatile memory for a next driving cycle.

The collection of the data with the one or more sensors may start at a collect time t_{c} when the speed of the vehicle is below 20 kilometer per hour and/or the location of the vehicle is measured to correspond with a parking area.

Efficient sensor measurement is triggered by a low speed of the vehicle and/or the vicinity of the vehicle to a parking area. The method prevents sensor measurements from occurring when the vehicle is not about to park, and avoids collecting environmental data that is not relevant for parking out.

The stored environmental map may be retrieved from the non-volatile memory at a drive off time t_{d}, when an increase in speed of the vehicle is initiated and the electronic control unit is re-activated out of the sleep mode.

At the time of retrieving the environmental map, new data may be collected by the one or more sensors and transmitted to the processor, the processor providing an updated support to the driver for departure, the updated support corresponding to a combination of the stored environmental map and the new data.

The method provides for update of the retrieved map saved at park in, at park out, to allow for new obstacles to be detected. In so doing the accuracy of the driver assistance that is provided is increased.

### Brief description of the drawings

The disclosure will be explained in more detail below with reference to drawings in which illustrative embodiments of the disclosure are shown. It will be appreciated by the person skilled in the art that other alternative and equivalent embodiments of the disclosure can be conceived and reduced to practice without departing from the true spirit of the disclosure, the scope of the disclosure being limited only by the appended claims.
Figures 1A-1B show top views of a parked vehicle powered to park out and subsequently colliding, illustrating a problem of the prior art,
Figures 2A-2D show top views of a vehicle in motion and parking in during a first driving cycle of parking between collect time t_{c}, before entering a sleep-mode at sleep time tₛ,
Figures 3A-3B show top views of a vehicle during a second driving cycle of parking, corresponding to park out, following a drive-off time t_{d}, using data from the prior driving cycle of figures 2A-2D,
Figure 4 shows a schematic of an electronic control unit for a vehicle,
Figure 5 shows a flowchart of a method for safe parking out.

### Detailed Description

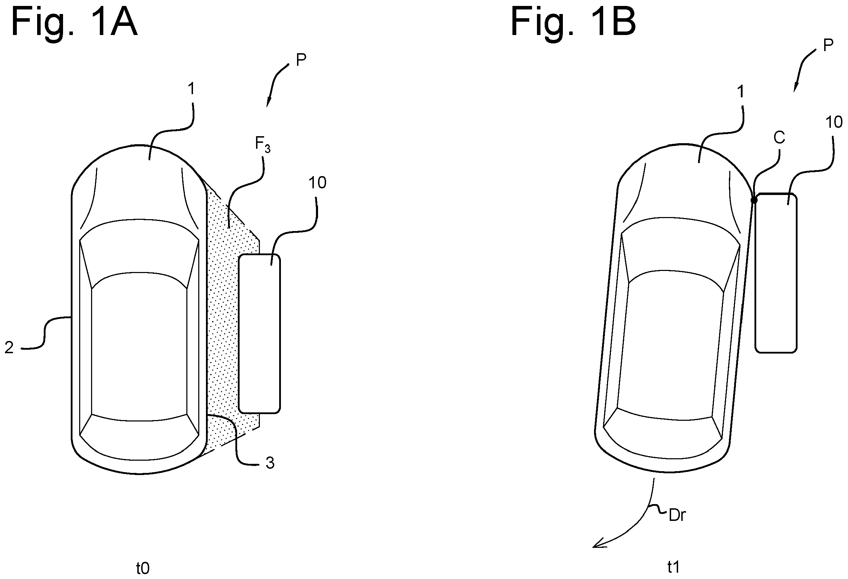

Figures 1A-1B show top views of a parked vehicle 1 powered at time t₀ to park out (1A) and undesirably colliding with an obstacle 10 at time t₁ ≳ t₀ (in 1B), illustrating a problem of the prior art. Figure 1A shows the vehicle 1 parked in a parking space P. The vehicle has just been powered and the driver or the assisted driving prepares to leave the parking space P in a parking out direction Dr for the road. The parking spot P comprises at least one obstacle 10 at one side, relatively close to the vehicle 1. The obstacle may be low and is hence not visible from the driver position. The vehicle 1 comprises one or more sensors 2, 3 which are re-activated out of a sleep mode as the vehicle is powered and start to sense the environment around the vehicle about to park out. The vehicle starts detecting the obstacle 10 with one or more of the sensors, e.g. sensors 3 due to their location at the vehicle and intrinsic field of view, a combination of which is shown as a field of view F3 overlapping with the obstacle 10. In some cases, the obstacle 10 may not be detected if it is located in a sensor blind spot. In Fig. 1B the obstacle 10 has been sensed from limited viewpoints, resulting in a high risk of collision between the vehicle 1 and the obstacle 10, especially at higher speeds of the vehicle A collision between the vehicle and the obstacle may occur in point C.

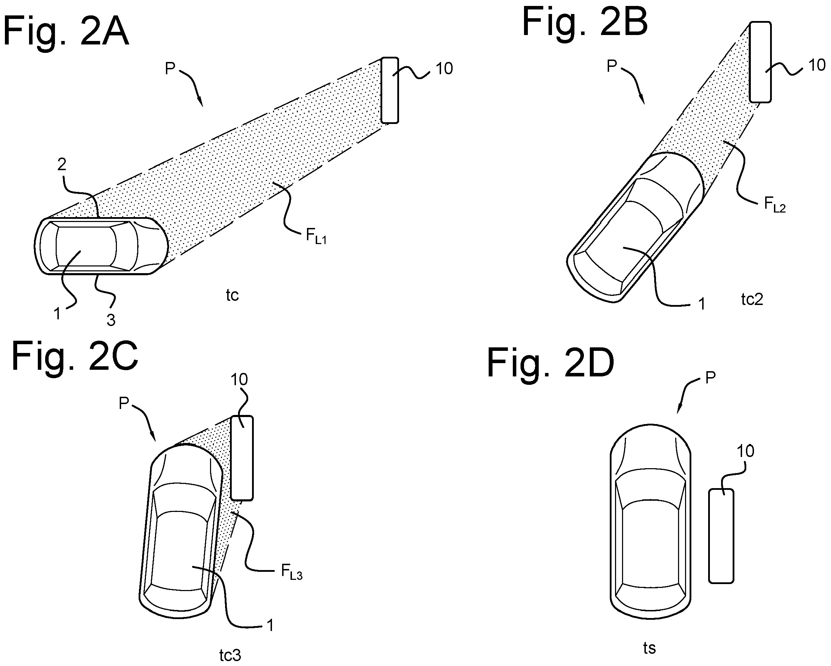

Figure 2A-2D shows top views of a vehicle 1 in motion at successive times t_{c}, t_{c2} and t_{c3} and in a stationary parked position at tₛ in an exemplary first driving cycle. The situation of the first driving cycle as illustrated shows an example of parking area P with an obstacle 10. In Fig. 2A, the vehicle 1 in motion approaches a parking space P at a time t_{c}. The vehicle 1 is shown to be a car but is not limited thereto and may be any of a bus, motorbike, truck or any other engine-powered road vehicle. The vehicle 1 moves at time t_{c} on a low-speed road or within a parking lot. The fact that the vehicle is approaching a parking space is detected by a vehicle speed dropping below a threshold of 20 km/h and/or a GPS position corresponding to a known parking area. The threshold may also be of 15 km/h, more preferably of 10 km/h. A known parking area may correspond with any of urban city areas, garages, dedicated parking areas registered in GPS maps. The speed threshold and GPS position may be evaluated within the vehicle by respective speed sensor and/or GPS.

The vehicle comprises one or more environmental sensors 2, 3 (not shown) inside the vehicle 1 and/or on an external surface of the vehicle 1. The environmental sensors 2, 3 may comprise at least one of a light detecting and ranging (LiDAR) sensor, a radar sensor, an ultrasonic sensor, camera or any other sensor known in the art for object detection. Optionally, the environmental sensors may further comprise a GPS device for localization. At least one of the environmental sensors 2, 3 is active at the time t_{c} and senses objects in the surrounding environment of the vehicle from which it is not obstructed, in particular an obstacle 10. The obstacle may be for instance a concrete barrier, a stone or a wall. The obstacle could damage the vehicle if the vehicle came into contact with it. Each obstacle 10 in the field of view F_{L1} of the environmental sensors 2 is detected as a multitude of three-dimensional space coordinates in the field of view of the sensor, e.g as a point cloud. Such a point cloud can be created either per sensor type or by combining the detector signals of all sensors. An environmental map of objects and free space is extracted from the point cloud by analyzing local variations in the intensity of detection samples in the point cloud. High intensity, i.e. many detections in a specific area, indicates a high probability that an object is occupying that area. Low intensity, i.e. few detections in a specific area, indicates a high probability of free space. In this environmental map, objects represent obstacles that could cause collision, and free space represents a drivable area where the vehicle can safely travel. This environmental map may be used in a next driving cycle starting after the parking time tₛ by an intelligent algorithm that can identify potential threats and send commands to any steering/braking actuator, sound system, or other driving assistance of the vehicle. The vehicle in motion in Fig. 2A further reaches a number of different other orientations.

Figures 2B, 2C shows two orientations of the vehicle 1 during parking at times t_{c2} > t_{c} and t_{c3} > t_{c2}, in each of which the vehicle still senses the same obstacle 10 from a different field of view, F_{L2} and F_{L3}, respectively. The different fields of view arise from different positions of the vehicle relative to the obstacle 10 during parking in. Each environmental sensor observes the obstacle 10 from these different orientations. A point of the obstacle surface may be scanned multiple sensors at different times. The measurements of a point on the object at different times from different angles by one or more sensors results in a high quality of the measured data. New map data measured at subsequent times, t_{c2} and t_{c3}, may serve to continuously update the environmental map created from the measurement at previous time t_{c}. A storage of the environmental map of the parking area P must occur before the vehicle is parked and powered off at time tₛ shown in Fig 2D. This map is saved to a non-volatile memory so that the data remains available for a next driving cycle. Part of the map data may be discarded before saving, for instance data relating to mobile objects that are of minor to no interest for a future driving cycle. For instance, map data relating to distances exceeding 10 m radius around an outer edge of the vehicle, preferably 5m radius around the outer edge of the vehicle may be discarded in order to save space in the non-volatile memory. The discarding of data may occur at any time until tₛ, preferably at tₛ.

Figure 2D shows that at tₛ the vehicle 1 has been parked successfully at the desired parking space P. The vehicle is locked and the sensors and other electronic elements enter a sleep mode.

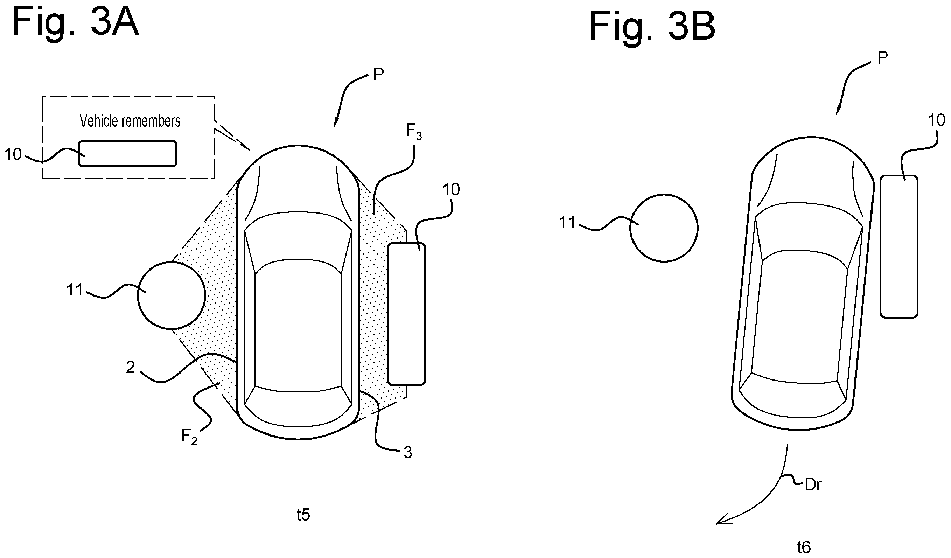

Figure 3A-3B show top views of a vehicle in a second driving cycle of park out between times t₅ (in 3A) and t₆ (in 3B), following a drive-off time t_{d}, the driving cycle using the stored map from the prior first driving cycle t_{c}-tₛ of Fig. 2A-2D. The second driving cycle shows the same parking space P as in Fig. 2A-2D.

As shown in Fig. 3A at time t₅, the vehicle has been powered up from the sleep mode in which it had entered at the end of the first driving cycle at tₛ. The obstacle 10, as a stationary obstacle, e.g. a wall, is at the same position in the vicinity of the vehicle. A new obstacle 11 has been placed next to the vehicle. An electronic control unit within the vehicle, of which the environmental sensors are part, and controlled by a processor, retrieves at time t₅ the environmental map from the non-volatile memory. The retrieved map may be used for visual aid to a driver via a display in the vehicle. The retrieved map may as well be used to provide an audio warning and/or audio driving assistance to the driver through an audio system in the vehicle, e.g. speakers. The retrieved map may as well serve to assist a driving of the vehicles so as to avoid the obstacle while park out. Sensors 2, 3 that have been re-activated out of the sleep mode may further measure from t₅ real time data/point cloud of obstacle 10 and the new obstacle 11. The new obstacle 11 is in the field of view F₂ of sensors 2. The new measurements that are done from the moment t₅, serve to update the retrieved map in real time and avoid contact with obstacle 11. In figure 3B, at a time t₆, the retrieved map that was generated during the previous driving cycle of Figs. 2A-2C, ensures a safe drive off to the vehicle in a direction Dr back to the road.

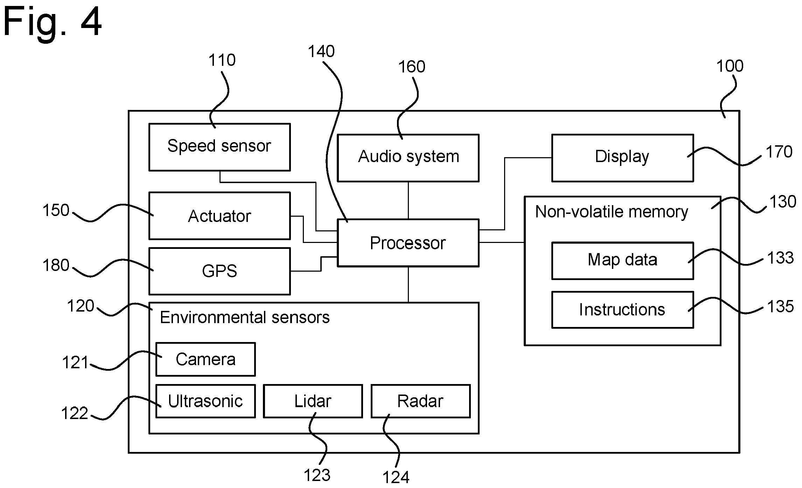

Figure 4 shows a diagram of an electronic control unit 100. The electronic control unit 100 can be implemented at least partially or entirely within or onto a vehicle, such as the vehicle of Fig.2A-2D. The electronic control unit 100 comprises a processor 140 that is in electronic connection with other elements of the electronic control unit 100. The processor 140 can instruct other elements of the control unit 100 using a given set of instructions 135 saved in a non-volatile memory 130 to which the processor is connected. The non-volatile memory 130 serves to store map data 133. Map data corresponding to a three-dimensional map is created from environmental data measured by one or more of environmental sensors 120, such as detailed above in the description of Fig. 2A-2D. Environmental sensors of the electronic control unit 100 include a camera 121, an ultrasonic sensor 122, a LiDAR sensor 123, and a radar sensor 124.The electronic control unit further comprises one or more actuators 150 or other driving assistance in the vehicle, so as to allow automatic braking and/or steering based on the environmental map. The electronic control unit comprises an audio system 160 that can generate an audio warning and/or audio driving assistance based on instructions from the processor. The electronic control unit further comprises a display 170 that serves as a visual aid to a vehicle driver or passenger based on the three-dimensional map. The electronic control unit comprise a GPS 180 to measure the position of the vehicle and compare it positions of known parking areas.

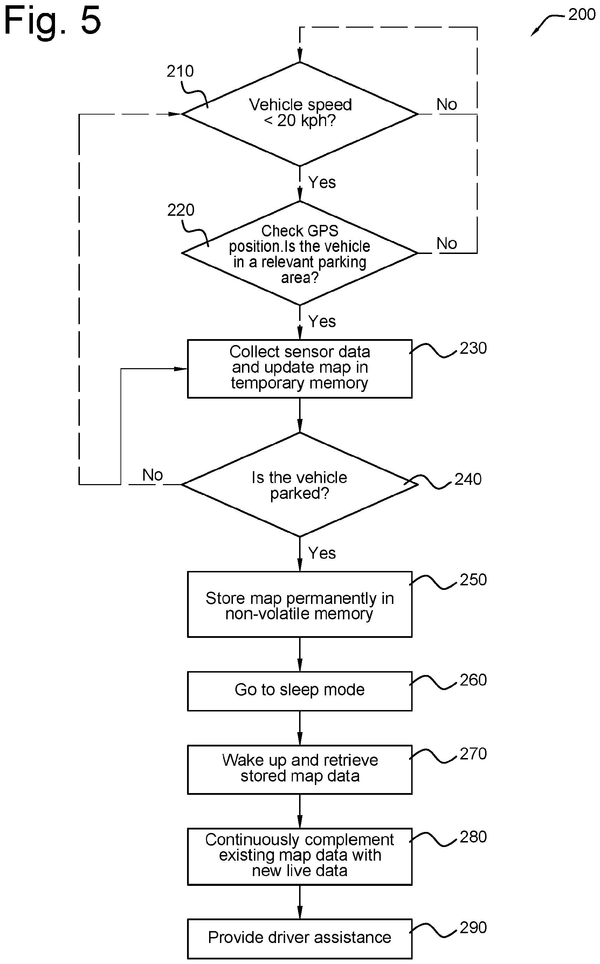

Figure 5 shows a flowchart of a control routine 200 for safe park out of a vehicle such as vehicle 1 leaving parking space P in Fig. 3B. At step 210 the speed sensor 110 checks whether a speed of the vehicle is below 20 km/h. At step 220 the GPS 180 measures whether a position of the vehicle to correspond with a known parking area of the GPS. If only step 210 is performed, and the speed is above 20 km/h, the routine is not executed as the vehicle is considered not about to park, and the speed sensor continues to measure vehicle speeds. If only step 220 is performed and the vehicle measured not to be in a known parking area, the method is not performed as the vehicle is considered not about to park. If both steps 210 and 220 are performed and none of the speed or the vehicle position are within a given range, nothing happens and step 230 is not carried out. If the vehicle speed is below 20 km/h and/or a GPS position is within a known parking area, the environmental sensors 120 will in step 230 start collecting sensor data of the environment surrounding the vehicle in motion. The measured data is used to create and continuously update an environmental map of objects and free space. In step 240 the vehicle may be parked and stationary. If not, the sensors continue with step 230. At least one of steps 210 and 220 may be performed in order to check whether the vehicle is still about to park. If not, step 230 is not performed. If the vehicle is parked at step 240, the created environmental map is stored in the non-volatile memory 130 at step 250. In this step, map data of all mobile objects and of remote stationary objects outside a circle of relevance around the vehicle with a radius of for instance 10 m, may be discarded in order to save memory space. At step 260 the electronic control unit 100 is entered in the sleep mode. At step 270, the driver preparing to leave the parking spot, and/or automatic start of the driving assistance, reactivates the electronic control unit. At this moment map data previously saved in the non-volatile memory 130 is retrieved. At step 280 existing retrieved map data is complemented by real-time data measured from the park out time. At step 290 the map and/or updated map is used to provide driver assistance or automatic driving assistance.

## Claims

1. An electronic control unit (100) for a vehicle (1), comprising:
at least one object sensor (120) for sensing objects in an environment in a vicinity of the vehicle,
a position sensor (110, 180) for sensing a speed of the vehicle and/or for sensing a position of the vehicle,
a non-volatile memory (130),
a processor (140) connected to the object sensor (120), the position sensor (110, 180), and the non-volatile memory (130),
the processor (140) being configured to instruct the object sensor (120) to sense and collect data on the environment in the vicinity of the vehicle (1) from a collect time t_{c} when the position sensor (110, 180) measures a vehicle speed below a predetermined threshold and/or measures a vehicle position that corresponds to the position of a parking area,
the processor (140) creating an environmental map of stationary objects around the vehicle on the basis of data of the at least one object sensor (120) and storing the environmental map in the non-volatile memory (130) prior to a sleep time tₛ, following on the collect time t_{c}, when the electronic control unit is placed in a sleep mode.

2. The electronic control unit (100) of claim 1, the processor (140) further configured to retrieve the environmental map from the non-volatile memory (130) after a drive-off time t_{d}, following on the sleep time tₛ, when an increase in vehicle speed is initiated and the electronic control unit (100) is re-activated out of the sleep mode.

3. The electronic control unit (100) of claim 2, the processor (140) further instructing the at least one object sensor (120) to collect further data, starting at the drive-off time tₛ, the processor complementing the stored environmental map with the further data to an updated map.

4. The electronic control unit (100) according to any of claim 2 or 3, further comprising a display (170) connected to the processor (140), the processor (140) providing a visual aid for a driver of the vehicle (1) after the drive-off time t_{d} and based on the retrieved environmental map and/or on the updated map.

5. The electronic control unit (100) according to any of claims 2 to 4, further comprising an audio system (160) connected to the processor (140) to provide an audio warning after the drive-off time t_{d}, based on the retrieved environmental map and/or on the updated map.

6. The electronic control unit (100) according to any of claims 2 to 5, the electronic control unit further comprising an automatic braking system or an actuator (150) to reduce a vehicle speed and/or steer the vehicle starting after the drive-off time t_{d}, based on the retrieved environmental map and/or on the updated map.

7. The electronic control unit (100) according to any of the preceding claims, the environmental map comprising a proximity map of the vicinity of the vehicle corresponding to a circle of at most 10m radius measured from an outer edge of the vehicle, preferably 5m radius.

8. The electronic control unit (100) according to any of the preceding claims, the object sensor (120) comprising at least one of an ultrasonic sensor, lidar, radar and camera.

9. An electronic control unit (100) for a vehicle according to any of claims 3-8 when dependent on claim 2, the processor (140) using a threat evaluation algorithm to identify when an automatic intervention is needed to avoid collision based on the retrieved environmental map and a vehicle trajectory.

10. Method (200) for safe park off of a vehicle at a drive-off time t_{d}, comprising:
collecting data with one or more sensors (230) placed on the outside of a vehicle,
creating an environmental map of stationary objects around the vehicle based on the collected data,
storing the environmental map (250) in a non-volatile memory when the vehicle is parked.

11. Method (200) according to claim 10, collecting the data with the one or more sensors (230) starting at a collect time t_{c} when the speed of the vehicle is below 20 kilometer per hour and/or the location of the vehicle is measured to correspond with a parking area.

12. Method (200) according to claim 10 or 11, the stored environmental map being retrieved from the non-volatile memory at a drive-off time t_{d}, when an increase in speed of the vehicle is initiated and the electronic control unit (100) is re-activated out of the sleep mode.

13. Method (200) according to claim 12, at the time of retrieving the environmental map (250), new data (280) being collected by the one or more sensors and transmitted to the processor, the processor providing an updated support to the driver for departure (290), the updated support corresponding to a combination of the stored environmental map (250) and the new data.

14. An electronic control unit (100), comprising means (140) for carrying out the method of any of claims 1-13.

15. A computer program comprising instructions which, when the program is executed by a computer, cause the computer to carry out the steps of any of claims 1-13.
